# EUROPÄISCHE PATENTSCHRIFT

(11) **EP 3 379 160 B1**
(45) Veröffentlichungstag und Bekanntmachung des Hinweises auf die Patenterteilung: **02.06.2021**
(21) Anmeldenummer: 18152739.1
(22) Anmeldetag: 22.01.2018
(51) Int. Cl.: F24F 11/30, F24F 110/00, F24F 110/64, F24F 120/14, F24F 3/16, F24F 11/00

(54) **ÜBERWACHUNGSVERFAHREN UND AUSWERTEVORRICHTUNG**
MONITORING METHOD AND EVALUATION DEVICE
PROCÉDÉ DE SURVEILLANCE ET DISPOSITIF D'EVALUATION

(30) Priorität: 26.01.2017 DE 102017101576
(43) Veröffentlichungstag der Anmeldung: 26.09.2018
(73) Patentinhaber: WEISS KLIMATECHNIK GMBH, 35447 Reiskirchen-Lindenstruth (DE)
(72) Erfinder: LOTZ, Karl-Heinz, 35415 Pohlheim (DE); RÖHM, Steffen, 35325 Mücke (DE)
(74) Vertreter: advotec.

(56) Entgegenhaltungen:
- WO-A1-2016/155109
- CA-A1- 2 957 083
- JP-A- 2009 030 837
- KR-A- 20140 046 675

## Beschreibung

Die Erfindung betrifft ein Verfahren zur Überwachung eines Raumsystems, insbesondere eines Reinraums, sowie ein Raumsystem, wobei das Raumsystem einen Arbeitsraum, eine Auswertevorrichtung, eine raumlufttechnische Anlage und eine Steuervorrichtung umfasst, wobei mittels der Steuervorrichtung die raumlufttechnische Anlage gesteuert und/oder geregelt wird, wobei mittels der raumlufttechnischen Anlage eine Luftwechselrate in dem Arbeitsraum und eine Druckdifferenz zwischen dem Arbeitsraum und einer Umgebung ausgebildet wird. Wobei in einem Überwachungszeitabschnitt mittels eines Partikelsensors einer Sensoreinrichtung der Steuervorrichtung Messwerte für Partikelkonzentration im Arbeitsraum oder in einer Abluft der raumlufttechnischen Anlage bestimmt werden.

Derartige Verfahren bzw. Raumsysteme werden regelmäßig zur Steuerung bzw. Regelung raumlufttechnischer Anlagen eingesetzt. Mit einer raumlufttechnischen Anlage wird einem Arbeitsraum Zuluft zugeführt bzw. Abluft abgeführt, wobei beispielsweise eine Lufttemperatur oder auch eine relative Feuchte mittels entsprechender Sensoren in dem Raum überwacht wird. Eine Veränderung der Lufttemperatur bewirkt dann eine Regelung der raumlufttechnischen Anlage über eine Steuervorrichtung derart, dass die Zuluft des Raumes gekühlt oder erwärmt wird, so dass die gewünschte Lufttemperatur erhalten bzw. erreicht wird. Bei bestimmten Arbeitsräumen, beispielsweise einem Reinraum, ist darüber hinaus vorgesehen, in einem in sich geschlossenen, begehbaren Arbeitsraum oder einer Arbeitskabine eine besonders saubere Luftatmosphäre auszubilden, um beispielsweise eine Kontamination von Laborproben oder mikroelektronischen Bauteilen mit Keimen, Mikroorganismen oder Staubpartikeln zu verhindern. Dazu wird mittels einer raumlufttechnischen Anlage in dem Arbeitsraum eine Partikelkonzentration ausgebildet, die gegenüber einer Umgebung des Arbeitsraums wesentlich vermindert ist. Auch wird eine permanente Druckdifferenz zwischen dem Arbeitsraum und der Umgebung ausgebildet, um beispielsweise ein Eindringen von Partikeln in den Arbeitsraum oder auch einen Austritt aus dem Arbeitsraum zu verhindern. Weiter ist es erforderlich, dass Personen zur Ausführung von Arbeitstätigkeiten den Arbeitsraum betreten. Trotz einer angepassten Arbeitskleidung und gegebenenfalls speziellen Arbeitsmitteln stellen diese Personen regelmäßig jeweils die größte Quelle für Partikel und andere Verschmutzungen dar.

Prinzipiell kann es sich bei dem Raumsystem um jede Art von Raum, insbesondere einen Arbeitsraum oder Reinraum handeln. Die nachfolgenden Beschreibungen eines Arbeitsraums können daher auch als Beschreibungen eines Reinraums oder eines Messraums verstanden werden und umgekehrt. Ein Reinraum bzw. Messraum kann auch ein Raum im Sinne von DIN EN ISO 14644, VDI 2083, VDI/VDE 2627 und/oder eu GMP Guideline Annex 1 in der am Prioritätstag gültigen Fassung sein.

Neben einer geeigneten Luftführung im Arbeitsraum, die Verschmutzungen von einem Arbeitsplatz wegführen soll, wird die dem Arbeitsraum zugeführte Luft mehrfach gefiltert und dem Arbeitsraum stetig zugeführt, um eine Partikelkonzentration unterhalb eines Grenzwertes zu halten. Dieser Grenzwert ergibt sich aufgrund einer Klassifizierung einer Reinheit des Arbeitsraums nach einer Norm, wie beispielsweise der ISO 14644-1. Um die erforderliche Druckdifferenz und die Partikelkonzentration im Arbeitsraum jederzeit sicherzustellen, wird die raumlufttechnische Anlage mit einer Luftwechselrate betrieben, die so gewählt ist, dass der Arbeitsraum von einer Anzahl Personen betreut werden kann, ohne dass eine zulässige Partikelkonzentration für die betreffenden Reinraumklasse überschritten wird. Um sicherzustellen, dass die zulässige Partikelkonzentration nicht überschritten wird, ist es bekannt Partikelsensoren innerhalb des Arbeitsraums oder der raumlufttechnischen Anlage anzuordnen, um eine Partikelkonzentration zu bestimmen. Diese Partikelsensoren liefern dann einen Messwert bzw. einen Ist-Wert für Partikelkonzentration im Arbeitsraum, welcher von der Steuervorrichtung weiterverarbeitet und beispielsweise zur Erhöhung einer Luftwechselrate oder Signalisierung eines Warnsignals verwendbar ist.

Gleichwohl kommt es regelmäßig in derartigen Arbeitsräumen zu unerwünschten Verunreinigungen von beispielsweise darin hergestellten Produkten oder von für Versuche verwendeten Proben.

Die JP 2009 030837 A offenbart ein Raumsystem, welches eine raumlufttechnische Anlage, eine Steuervorrichtung sowie einen Arbeitsraum umfasst. Weiter weist das Raumsystem eine Kamera auf, mittels derer eine Bewegungsgeschwindigkeit und eine Bewegungsstrecke einer in dem Arbeitsraum befindlichen Person erfasst werden kann. Basierend auf der Bewegungsgeschwindigkeit und der Bewegungsstrecke der Person errechnet die Steuervorrichtung eine mit der Bewegung der Person verbundene Aufwirbelung von Staub in dem Arbeitsraum und weist die raumlufttechnische Anlage an, eine Luftwechselrate einer Menge des aufgewirbelten Staubes entsprechend zu erhöhen.

Der vorliegenden Erfindung liegt daher die Aufgabe zugrunde, ein Verfahren zur Überwachung eines Raumsystems, eine Auswertevorrichtung für ein Raumsystem sowie ein Raumsystem vorzuschlagen, mit dem bzw. der eine Qualität von in einem Arbeitsraum durchgeführten Arbeitsverfahren verbessert werden kann.

Diese Aufgabe wird durch ein Verfahren mit den Merkmalen des Anspruchs 1, und ein Raumsystem mit den Merkmalen des Anspruchs 18 gelöst.

Bei dem erfindungsgemäßen Verfahren zur Überwachung eines Reinraumsystems, insbesondere eines Reinraums, umfasst das Raumsystem einen Arbeitsraum, eine raumlufttechnische Anlage und eine Steuervorrichtung, wobei mittels der Steuervorrichtung die raumlufttechnische Anlage gesteuert und/oder geregelt wird, wobei mittels der raumlufttechnischen Anlage eine Luftwechselrate in dem Arbeitsraum und eine Druckdifferenz zwischen dem Arbeitsraum und einer Umgebung ausgebildet wird, wobei in einem Überwachungszeitabschnitt mittels eines Partikelsensors einer Sensoreinrichtung der Steuervorrichtung Messwerte für Partikelkonzentration im Arbeitsraum oder in einer Abluft der raumlufttechnischen Anlage bestimmt werden, wobei mittels einer Kamera der Sensoreinrichtung Bilddatensätze des Arbeitsraums in den Überwachungszeitabschnitt erfasst werden, wobei mittels einer Auswertevorrichtung die Bilddatensätze mit Zeitwerten des Überwachungszeitabschnitts und Messwerten für Partikelkonzentration korreliert werden, wobei die Bilddatensätze in einer Speichereinrichtung abrufbar gespeichert werden. Dadurch, dass die Kamera innerhalb des Arbeitsraums bzw. Reinraums Bilddatensätze erfasst bzw. aufnimmt und mittels der Auswertevorrichtung des Raumsystems diese Bilddatensätze mit Zeitwerten korreliert werden, wird es möglich die Bilddatensätze den Messwerten für Partikelkonzentration zuzuordnen. Demnach werden Zeitwerte der Messwerte des Partikelsensors und der Bilddatensätze der Kamera miteinander synchronisiert und in einem Speicher der Speichereinrichtung der Auswertevorrichtung abrufbar hinterlegt. Somit kann eine Überwachung bzw. ein sogenanntes Monitoring des Arbeitsraums durchgeführt werden. Insbesondere kann eine Schwankung einer Partikelkonzentration über einen Überwachungszeitabschnitt dann nachträglich überprüft und auf eine mögliche Arbeitstätigkeit bzw. einen möglichen Arbeitsschritt innerhalb des Arbeitsraums zurückverfolgt werden. Durch die Korrelation der Bilddatensätze mit Zeitwerten wird es möglich, den Zeitpunkt einer Veränderung einer Partikelkonzentration genau nachzuvollziehen. Die Auswertevorrichtung kann beispielsweise Mittel zur Datenverarbeitung aufweisen bzw. ein Computer sein, der während eines Überwachungszeitabschnitts die Messwerte des Partikelsensors zusammen mit den Bilddatensätzen und Zeitwerten speichert. Eine Auswertung der Partikelkonzentration bzw. Bilddatensätze ist dann jederzeit möglich. Wird eine ungewöhnliche Schwankung der Partikelkonzentration festgestellt oder sind Arbeitsergebnisse aufgrund einer Kontamination mit Partikeln unbefriedigend, ist es möglich die im Arbeitsraum durchgeführten Arbeiten anhand der Bilddatensätze zum Zeitpunkt der gemessenen, erhöhten Partikelkonzentration nachträglich zu überprüfen. So lässt sich leicht feststellen, welche Arbeitsschritte oder Verhaltensweisen von Personen in dem Arbeitsraum zu der unerwünscht hohen Partikelkonzentration geführt haben können. Dadurch wird es möglich zukünftig Fehler zu vermeiden und gegebenenfalls durch geänderte Arbeitsanweisungen oder Arbeitsschritte unerwünscht hohe Partikelkonzentrationen auszuschließen, wodurch eine Qualität eines Arbeitsergebnisses wesentlich verbessert werden kann.

Die Messwerte bzw. Ist-Werte für Partikelkonzentration und die Bilddatensätze werden jeweils mit dem Zeitwert korreliert und in einem Speicher der Speichereinrichtung abrufbar hinterlegt. Demgemäß kann mindestens ein Zeitsignalgeber eingesetzt werden, welcher aus dem Stand der Technik weithin bekannt ist. Hierzu können beispielsweise Uhren, insbesondere Quarzuhren verwendet werden. Weiterhin können Zeitsignale aus externen Quellen, die beispielsweise über das Internet abgerufen werden können, verwendet werden. Als Speicher können allgemein bekannte Medien eingesetzt werden, die vorzugsweise eine dauerhafte Aufbewahrung der Daten ermöglichen. Gemäß einer bevorzugten Ausführungsform können Zwischenspeicher eingesetzt werden, deren Speicherinhalt auf einen dauerhaften Speicher übertragen wird. Zu den dauerhaften Datenspeichern zählen beispielsweise elektronische Speichermedien, wie Speicherkarten, USB-Sticks und Solid State Drives (SSD), optische Speichermedien, wie CD-DVD-Medien, und magnetische Speichermedien, wie Festplatten, Laufwerke und Magnetbänder. Die Bilddatensätze werden durch die Kamera erzeugt, wobei die Kamera im visuell sichtbaren Bereich des Lichts arbeiten kann. Weiterhin können auch Kameras eingesetzt werden, die im IR- und/oder im UV-Bereich des Lichtspektrums empfindlich sind. Vorzugsweise können zumindest hundert Messwerte pro Minute der erhaltenen Bilddaten abgespeichert werden.

Die Bilddatensätze können dann mittels der Auswertevorrichtung verarbeitet werden, wobei mittels der Auswertevorrichtung eine Veränderung der Bilddatensätze bestimmt werden kann. Eine mit der Kamera optisch erfassbare Veränderung in dem Arbeitsraum kann mittels der Auswertevorrichtung als Zustandsänderung bestimmt werden. Dies kann durch Bildverarbeitung erfolgen, wobei ein erster Bilddatensatz mit einem zweiten bzw. M-Bilddatensatz verglichen werden kann. Der erste Bilddatensatz kann ein innerhalb des Arbeitsraums zeitlich vorangegangener Bilddatensatz oder ein bereits in der Auswertevorrichtung gespeicherter Bilddatensatz sein. So können auch Bilddatensätze von Referenzobjekten oder Referenzräumen herangezogen werden, um die optisch erfassbare Veränderung zu detektieren. Die Auswertevorrichtung kann daher auch Mittel zur Datenverarbeitung, insbesondere zur Verarbeitung von Bilddatensätzen aufweisen. Hinsichtlich der optischen Erfassbarkeit der Veränderung an dem Arbeitsraum kann es bereits ausreichend sein, wenn die Kamera den Arbeitsraum nur abschnittsweise erfasst.

Weiter kann eine mit der Kamera optisch erfassbare Veränderung innerhalb des Arbeitsraumes in dem Überwachungszeitabschnitt mittels der Auswertevorrichtung als eine Zustandsänderung bestimmt werden. Dadurch wird es möglich, eine Veränderung des Arbeitsraums in dem Überwachungszeitabschnitt zu bestimmen und gleichzeitig als solche zu registrieren. Diese Zustandsänderung kann auch von der Auswertevorrichtung als solches signalisiert werden. Weiter können auch innerhalb des Arbeitsraums bzw. eines Erfassungsbereichs der Kamera Referenzpunkte definiert werden, wobei dann eine örtliche Veränderung der Referenzpunkte in dem Überwachungszeitabschnitt mittels der Auswertevorrichtung als Zustandsänderung bestimmt werden kann. Beispielsweise können an einem Arbeitsgerät Referenzpunkte als eine aufgebrachte Markierung ausgebildet sein, die mit der Kamera optisch erfassbar ist. So wird es möglich mit der Kamera leicht nachzuverfolgen, ob ein Arbeitsgerät sich innerhalb eines für das Arbeitsgerät vorgesehenen Arbeitsbereichs befindet oder außerhalb dieses Arbeitsbereichs verbracht wurde. Alternativ kann auch in einem Bilddatensatz eine Position bzw. eine Koordinate, die durch einen Pixel repräsentiert wird, als Referenzpunkt in dem Arbeitsraum definiert werden. Eine Bewegung innerhalb des Arbeitsraums wird dann zu einer Verlagerung von Intensitäts- und Farbwerten des Pixels zu einem benachbarten Pixel, was als Verschiebung des Referenzpunktes detektiert werden kann.

Anhand der Veränderung der Bilddatensätze in dem Überwachungszeitabschnitt kann eine Bewegungsgeschwindigkeit einer im Arbeitsraum befindlichen Person oder eines Gegenstands mittels der Auswertevorrichtung bestimmt werden. Die Bewegungsgeschwindigkeit kann beispielsweise dadurch bestimmt werden, dass die Geschwindigkeit der Zustandsänderung relativ bezogen auf einen Weg, der aus einem Bildausschnitt der Kamera durch beispielsweise Referenzpunkte bestimmbar ist, errechnet wird. Beispielsweise kann in einem Reinraum eine zu hohe Bewegungsgeschwindigkeit dazu führen, dass es in einem Arbeitsbereich zu unerwünschten Luftverwirbelungen kommt, die dann in einer zu hohen Partikelkonzentration in dem Arbeitsbereich resultieren. Eine Maßnahme zur Qualitätsverbesserung von Arbeitsergebnissen kann dann eine geänderte Arbeitsanweisung für die betreffenden Personen sein.

Vorteilhaft ist es, wenn die Auswertevorrichtung Bilddatensätze mehrerer Kameras gleichzeitig verarbeiten kann. Demnach kann das Verfahren auch mit mehreren, beispielsweise drei Kameras durchgeführt werden. Auch kann vorgesehen sein den Arbeitsraum im Wesentlichen allseitig mit den Kameras zu erfassen. Weiter können mehrere Partikelsensoren der Sensoreinrichtung in dem Arbeitsraum angeordnet sein. Dann kann auch jedem, der über einen Partikelsensor ermittelten Messwerte eine Bilddatei zugeordnet werden. Alternativ kann auch vorgesehen sein mehrere Messwerte einer Bilddatei zuzuweisen oder umgekehrt. Dadurch kann Speicherplatz der Speichereinrichtung eingespart werden. Bevorzugt können an mindestens zwei bis drei Orten des Arbeitsraums mit Zeitwerten korrelierte Bilddatensätze erfasst werden. Diese Erfassung kann auch mit nur einer Kamera oder wahlweise mit mehreren Kameras erfolgen, wobei aus den erhaltenen Bildern bzw. Bilddatensätzen jeweils Bildausschnitte generiert werden können, um alleine die betreffenden Orte aufzuzeichnen.

In einer bevorzugten Ausführungsform kann die Kamera eine Wärmebildkamera sein, wobei der Arbeitsraum mittels der Wärmebildkamera thermografisch aufgenommen werden kann. So wird es dann auch möglich eine Veränderung einer Temperatur einer Oberfläche des Arbeitsraums zu bestimmen. Mit der Wärmebildkamera ist es dann möglich eine thermografische Aufnahme des Arbeitsraums zu erstellen und auszuwerten. Dabei kann mit der thermografischen Aufnahme ein Temperaturgradient innerhalb des Arbeitsraums bzw. des Bilddatensatzes dargestellt und gegebenenfalls anhand einer Intensität bzw. Farbgebung der Aufnahme ein Temperaturwert an einem Punkt des Arbeitsraums abgeschätzt werden. Der Arbeitsraum kann jedoch eine stark reflektierende Oberfläche durch Wände und Einbauten aufweisen, die eine genaue thermografisehe Aufnahme, unter anderem auch aufgrund von geringen Abständen innerhalb des Arbeitsraums, erschweren.

Vorteilhaft können daher in dem Überwachungszeitabschnitt mittels der Wärmebildkamera aus Pixeln gebildete thermografische Aufnahmen des Arbeitsraums, die durch die Bilddatensätze repräsentiert werden, erfasst werden, wobei den Bilddatensätzen jeweils Zeitwerte innerhalb des Überwachungszeitabschnitts zugeordnet werden können, wobei je Zeitwert zumindest einem Pixel eines Bilddatensatzes ein Temperaturwert innerhalb des Überwachungszeitabschnitts zugeordnet werden kann, derart, dass mittels der Wärmebildkamera eine Temperaturmessung eines von dem Pixel repräsentierten Oberflächenpunktes einer Oberfläche innerhalb des Arbeitsraums erfolgen kann. Die thermografische Aufnahme kann aus Pixeln, entsprechend einer Bildauflösung der Wärmebildkamera, ausgebildet werden, wobei die Pixel durch Datenfelder in dem Bilddatensatz repräsentiert werden können. Die Bilddatensätze können in einer Abfolge an die Auswertevorrichtung übermittelt werden, die den Bilddatensätzen entsprechend der Abfolge jeweils Zeitwerte relativ bezogen auf den Überwachungszeitabschnitt zuordnet. Demnach können die Bilddatensätze mit Zeitwerten korreliert werden, so dass jeder Bilddatensatz einem Zeitpunkt des Überwachungszeitabschnitts zugeordnet werden kann. So kann beispielsweise ein Temperaturverlauf an einer Werkbank innerhalb des Arbeitsraums aufgezeichnet werden. Dieser Temperaturverlauf kann dadurch erhalten werden, dass für zumindest ein Pixel eines einzelnen Bilddatensatzes innerhalb des Überwachungszeitabschnitts ein Temperaturwert verlässlich bekannt ist. Dies kann beispielsweise schon dadurch vorliegen, dass die Wärmebildkamera kalibriert wurde. Der Temperaturwert bzw. Temperaturverlauf des einen Pixels kann im Verhältnis auf andere Pixel übertragen werden, so dass sich für diese ebenfalls verhältnismäßig genaue Temperaturwerte ergeben. Die Zuordnung und Berechnung der Temperaturwerte für die Pixel kann mittels der Auswertevorrichtung durchgeführt werden. Insgesamt kann so mit der Wärmebildkamera eine vergleichsweise genaue Temperaturmessung eines Oberflächenpunktes innerhalb des Arbeitsraums, der von einem Pixel mit dem bekannten Temperaturwert repräsentiert wird, durchgeführt werden. Dann ist es auch nicht mehr erforderlich direkt im Arbeitsraum Sensoren zur Temperaturmessung anzubringen. Eine Temperaturmessung von Oberflächen im Arbeitsraum wird wesentlich vereinfacht.

Eine Zuordnung des Temperaturwertes zu einem Pixel kann in Abhängigkeit eines Intensitätswertes des Pixels erfolgen. Ein Intensitätswert kann ein Helligkeitswert oder ein Farbwert der thermografischen Aufnahme sein. Kann ein Pixel einem Oberflächenpunkt innerhalb des Arbeitsraums zugeordnet werden, dessen Temperatur eindeutig bekannt ist, kann der Intensitätswert des Pixels mit der betreffenden Temperatur gleichgesetzt werden. Wenn Pixel unterschiedliche Intensitätswerte aufweisen, kann diesen Intensitätswerten im Verhältnis zum Intensitätsunterschied ein Temperaturwert zugewiesen werden.

Weiter können Temperaturwerte von einzelnen Pixeln, Gruppen von Pixeln oder allen Pixeln eines Bilddatensatzes bestimmt werden. Die einzelnen Pixel können dabei voneinander entfernt sein bzw. die Gruppen von Pixeln benachbart sein. Wesentlich ist, dass zumindest einem oder auch mehreren Pixeln eines Bilddatensatzes, vorzugsweise allen Pixeln, ein Temperaturwert innerhalb des Überwachungszeitabschnitts zugeordnet werden kann. Insbesondere bei Arbeitsräumen, die von Personen betreten werden, und innerhalb derer Maschinen zum Einsatz kommen können dann jeweils einer Person oder einer Maschine zugehörige Pixel oder Gruppen von Pixeln als der jeweiligen Person zur Maschine zugehörig definiert oder ausgewertet werden.

Mittels der Auswertevorrichtung kann die Wärmebildkamera vor, während oder nach einer thermografischen Aufnahme kalibriert werden, wobei ein Immissionsgrad oder ein Temperaturwert des Pixels nach oder während einer Aufnahme der Wärmebildkamera bestimmt werden kann. Da andere relevanten Daten in der Auswertevorrichtung erfasst bzw. gespeichert werden können, kann auch während oder nach der thermografischen Aufnahme mit der Wärmebildkamera die Wärmebildkamera kalibriert bzw. die Wärmebildaufnahme korrigiert werden. Prinzipiell ist es jedoch auch möglich, die Wärmebildkamera vor einer thermografischen Aufnahme dadurch zu kalibrieren, dass mit der Wärmebildkamera allein ein Referenzhintergrund bei einer für eine nachfolgende Messung vorgesehenen Temperatur aufgenommen wird. Die Kalibrierung kann dann mittels der Auswertevorrichtung oder je nach Ausführung der Wärmebildkamera direkt an der Wärmebildkamera erfolgen.

Die Auswertevorrichtung kann in Aufnahmen des Arbeitsraums, die durch die Bilddatensätze repräsentiert werden, eine Person erfassen, wobei die Auswertevorrichtung die Bilddatensätze verarbeitet und eine Körpertemperatur der Person messen kann. So ist es vorstellbar, dass mittels Bildbearbeitung zunächst eine genaue Lage und Gestalt der Person analysiert wird, bevor definierte Messpunkte in Abhängigkeit der Lage oder Gestalt der Person gemessen werden. Dann ist es nicht erforderlich die Person besonders genau zu positionieren oder es kann gegebenenfalls nach Belieben zwischen verschiedenen Personen bei der Messung einer Körpertemperatur gewechselt werden. Beispielsweise ist es auch möglich eine Person dadurch zu detektieren, dass von der Auswertevorrichtung die Veränderung in den Bilddatensätzen, die durch eine Bewegung einer Person bedingt ist, erkannt wird. Mittels Bildverarbeitung kann auch eine sogenannte Gesichtserkennung an der Person erfolgen, wobei dann vorgesehen sein kann, dass eine Körpertemperatur der Person im Bereich des Gesichts, gemessen wird. Da Personen in Arbeitsräumen regelmäßig bekleidet sind, ist eine Messung der Körpertemperatur am Kopf besonders vorteilhaft. Wenn die Auswertevorrichtung eine signifikant erhöhte Körpertemperatur ermittelt, kann diese von der Auswertevorrichtung als ein Indikator für eine Erkrankung der Person bestimmt werden. Gerade kranke Personen sind eine Quelle von Bakterien oder Viren, die beispielsweise bei einer Durchführung von Versuchen in dem Arbeitsraum unerwünscht sind. Die Auswertevorrichtung kann dann signalisieren, dass die betreffende Person auf eine Erkrankung hin zu überprüfen ist.

Die Auswertevorrichtung kann in Aufnahmen des Arbeitsraums, die durch die Bilddatensätze repräsentiert werden, ein Gesicht einer Person erfassen, wobei die Auswertevorrichtung die Bilddatensätze verarbeiten und das Gesicht einem in der Speichereinrichtung gespeicherten biometrischen Datensatz eines Gesichtes einer bestimmten Person zuordnen kann. Der biometrische Datensatz eines Gesichts kann in Form eines Bilddatensatzes in der Speichereinrichtung gespeichert sein. So kann beispielsweise das Gesicht einer bestimmten Person aufgenommen werden und in der Speichereinrichtung gespeichert werden. Die Auswertevorrichtung kann dann diesen biometrischen Datensatz mit Bilddatensätzen, die ein Gesicht einer Person enthalten, vergleichen, wobei bei übereinstimmenden oder alternativ nicht übereinstimmenden biometrischen Datensätzen von der Auswertevorrichtung ein Kontrollsignal erzeugt werden kann. Durch diesen Vergleich wird es dann möglich festzustellen, ob sich in dem Arbeitsraum für einen Zutritt zu dem Arbeitsraum autorisierte Personen aufhalten. Auch hier kann vorgesehen sein, dass der Vergleich des biometrischen Datensatzes mit den Bilddatensätzen und den darin enthaltenen biometrischen Datensätzen eines Gesichts einer Person mit Zeitwerten korreliert wird. Dies kann automatisiert erfolgen, so dass die Bilddatensätze kontinuierlich mit den biometrischen Datensätzen verschiedener Personen verglichen werden können. Auch können die in den Bilddatensätzen enthaltenen Informationen Farbwerte, Kontrastwerte und/oder Temperaturwerte enthalten. Durch diese Ausgestaltung kann eine Änderung der Farbe und/oder Temperatur eines Gegenstandes oder einer Person überprüft werden, so dass bei einem unzulässigen Farb- und/oder Temperaturwert ein Kontroll- oder Warnsignal erzeugt werden kann. Durch diese Maßnahme können Fehler besonders frühzeitig erkannt und behoben werden. Das Kontroll- oder Warnsignal kann hierbei durch Datenverbindungen an beliebige Empfänger übermittelt werden, wobei eine Benachrichtigung per E-Mail an Computer oder per SMS antragbare Telefone erfolgen kann. Weiterhin kann ein akustisches oder optisches Signal im Bereich des Arbeitsraums erzeugt werden. Ferner können die genannten Signale in einem Speicher abgelegt und, vorzugsweise mit Zeitwerten versehen, mit den Messwerten und Bilddaten synchronisiert werden.

Die Auswertevorrichtung kann in Aufnahmen des Arbeitsraums, die durch die Bilddatensätze repräsentiert werden, eine Person erfassen, wobei die Auswertevorrichtung die Bilddatensätze verarbeitet und eine Personenanzahl im Arbeitsraum und/oder eine Bewegungsintensität der Person bestimmen kann. Eine Erkennung einer Person kann mit bekannten Mitteln zur Bildverarbeitung durch die Auswertevorrichtung erfolgen. So ist es dann möglich sicherzustellen, dass der Arbeitsraum nur mit der maximal zulässigen Personenanzahl besetzt ist. Weiter kann vorgesehen sein die jeweils im Arbeitsraum befindliche Personenanzahl zeitsynchron in der Speichereinrichtung als ein Wert abzuspeichern. Da Bewegungen im Arbeitsraum stets eine Emission von Partikeln befördern, kann auch eine Bewegungsintensität der jeweiligen Personen gemessen werden. Die Bewegungsintensität kann einfach aus einer Bewegungsgeschwindigkeit und/oder Bewegungsdauer in dem Überwachungszeitabschnitt errechnet werden. Abschließend kann dann festgestellt werden, ob eine erhöhte Partikelkonzentration zu einem bestimmten Zeitpunkt auf einen bestimmten Bewegungsablauf einer Person zurückzuführen ist.

Demnach kann ein Vergleich in aufgezeichneten Bilddatensätzen mit einer Partikelkonzentration zur Kontrolle der Klimatisierungsbedingungen und/oder zur Feststellung von kritischen Betriebsbedingungen dienen. Der Vergleich der mit Zeitwerten korrelierten Bilddatensätze mit Messwerten für Partikelkonzentration kann dann beispielsweise eine Farberkennung, Mustererkennung, Bewegungserkennung und/oder Positionserkennung beinhalten.

Die Kamera kann innerhalb des Arbeitsraums oder auch außerhalb des Arbeitsraums verwendet werden. Innerhalb des Arbeitsraums kann die Kamera in einem entsprechenden Gehäuse untergebracht sein. Außerhalb des Arbeitsraums kann mit der Kamera durch beispielsweise ein Fenster in dem Arbeitsraum dieser aufgenommen werden. Vorteilhaft ist hier, dass dann durch die Kamera keine unerwünschten Verunreinigungen in den Arbeitsraum verschleppt werden können.

Mittels der Sensoreinrichtung können in dem Überwachungszeitabschnitt Messwerte für Lufttemperatur, relative Luftfeuchte, Luftwechselrate, Luftdruck, Bewegungsintensität, Personenanzahl, CO2-Konzentration und/oder Türöffnung erfasst werden. Diese Messwerte können jeweils mit eigens dafür vorgesehenen Sensoren erfasst werden und auch wie die Messwerte für Partikelkonzentration mit Zeitwerten des Überwachungszeitabschnitts korreliert und in der Speichereinrichtung abrufbar gespeichert werden. Der Arbeitsraum wird dadurch noch besser überwachbar, so dass auch in schwierigen Fällen die Ursache für eine erhöhte Partikelkonzentration leicht aufgefunden werden kann.

Ferner kann vorgesehen sein, dass das Verfahren eine computergestützte Auswertung umfasst, wobei die mit Zeitwerten korrelierten Bilddatensätze und die mit Zeitwerten korrelierten Messwerte grafisch aufbereitet werden, so dass ein mit einem Zeitwert korrelierter Messwert genau einem Bild zugeordnet ist. Durch eine bevorzugte grafische Aufbereitung können die gespeicherten Bilddaten und Messwerte auf einem oder mehreren Displays angezeigt werden. Besonders bevorzugt kann der zeitliche Verlauf der mit Zeitwerten korrelierten Messwerte grafisch dargestellt werden. Bei einer Ausführungsform können beispielsweise die Zeitwerte auf der Abszisse und die mit dem jeweiligen Zeitwert korrelierten Messwerte, beispielsweise die Partikelkonzentration auf der Ordinate aufgetragen werden, so dass eine Messwertkurve erhalten wird, die auf einem Display dargestellt wird. Die Bilddaten sind hierbei zunächst nicht auf dem Display sichtbar. Bei einer Auswahl eines entsprechenden Zeit- und/oder Messwertes über eine Eingabevorrichtung, beispielsweise durch Anklicken eines Zeitwertes mit einer Maus, wird ein Bild des Arbeitsraums im gleichen oder einem weiteren Display angezeigt, das mit diesem Zeitwert verknüpft ist. Gemäß einer bevorzugten Ausführungsform können Bildern von verschiedenen Orten einem Zeitwert zugeordnet sein. In diesem Fall können alle aufgenommenen Bilder angezeigt und gegebenenfalls vergrößert werden, oder es können ein oder mehrere Orte, an denen die Bilder aufgenommen wurden, zuvor ausgewählt werden. Durch diese Ausgestaltung kann besonders einfach überprüft werden, ob die Arbeitsbedingungen an unterschiedlichen Orten den Erwartungen entsprachen, falls eine Partikelkonzentration während des Überwachungszeitabschnitts zu hoch war.

In einer weiteren Ausgestaltung können die Bilddatensätze kontinuierlich dargestellt werden, wobei diese Daten in Echtzeit- oder in Zeitrafferdarstellung wiedergegeben werden können. In dieser Darstellungsweise kann eine Markierung mit einstellbarer Geschwindigkeit über die grafische Anzeige der Messdaten erfolgen, wobei gleichzeitig und synchron mit der Markierung die Bilddatensätze angezeigt werden können. Hierbei kann das Bild optisch getrennt von der Messwertdarstellung angezeigt werden, beispielsweise in einem Bildfenster oder einem zweiten Display. Diese Darstellung kann vorzugsweise im Zeitraffer erfolgen. So kann schnell und unkompliziert ein Eindruck von dem vorliegenden Überwachungszeitabschnitt gewonnen werden und nicht erwünschte Zustände können schnell erkannt werden. Weiterhin können die zuvor beschriebenen, abgespeicherten Kontroll- oder Warnsignale bei der Auswertung als Markierungspunkte dienen. Ferner kann vorgesehen sein, dass die Bilddatensätze kontinuierlich ausgewertet werden, wobei bei signifikanten Änderungen die zugehörigen Messwerte ausgelesen und angezeigt werden. Falls mehrere Messwerte einem Bilddatensatz zugeordnet sind, wird der entsprechende Wertebereich dargelegt. Hierbei kann die Auswertung vorzugsweise im Zeitraffer erfolgen. Durch die Zeitraffertechnik ist es möglich langsame Veränderungen sichtbar zu machen.

Die Auswertevorrichtung kann der Steuervorrichtung eine Veränderung der Bilddatensätze signalisieren, wobei die Steuervorrichtung eine Anpassung der Luftwechselrate in Abhängigkeit der Veränderung vornehmen kann. Dadurch dass die Auswertevorrichtung Zustandsänderungen innerhalb des Arbeitsraums erkennen kann, wird es möglich, innerhalb des Überwachungszeitabschnitts mittels der Steuervorrichtung in die raumlufttechnische Anlage einzugreifen und diese zu regeln bzw. anzupassen. Beispielsweise kann dann vorgesehen sein, die Luftwechselrate in dem Arbeitsraum abzusenken, wenn der Arbeitsraum überhaupt nicht oder von nur wenigen Personen betreten wird. Umgekehrt kann die Luftwechselrate angehoben werden, wenn sich eine Anzahl von Personen in dem Arbeitsraum aufhält. Demnach kann die Luftwechselrate an eine Nutzung des Arbeitsraums angepasst werden, was in einer veränderten Lüfterdrehzahl der raumlufttechnischen Anlage resultiert. Dadurch wird es möglich aufgrund der bedarfsgerecht abgesenkten Lüfterdrehzahl Energie einzusparen.

Mittels der Auswertevorrichtung können Betriebsdaten oder Messwerte der raumlufttechnischen Anlage oder anderer, im Arbeitsraum befindlicher Maschinen mit Zeitwerten des Überwachungszeitabschnitts korrigiert werden, wobei die Betriebsdaten oder Messwerte in der Speichereinrichtung abrufbar gespeichert werden können. Dadurch, dass die Betriebsdaten und/oder Messwerte der raumlufttechnischen Anlage sowie eventuell im Arbeitsraum vorhandener Maschinen in das Monitoring des Arbeitsraums mit einbezogen werden, kann eine erhöhte Partikelkonzentration, deren Ursache auf einen anlagenspezifischen Fehler zurückzuführen ist, leicht aufgefunden werden.

Die Auswertevorrichtung kann auch aus den gespeicherten Betriebsdaten oder Messwerten regelmäßig wiederkehrende Abfolgen von Betriebszuständen Ableiten, wobei die Steuervorrichtung eine Anpassung der Luftwechselrate auf einen zukünftig zu erwartenden Betriebszustand vornehmen kann. Beispielsweise kann die Auswertevorrichtung dann regelmäßig wiederkehrende Arbeitstätigkeiten erkennen, die zu einer erhöhten Partikelkonzentration im Arbeitsraum führen. Die Steuervorrichtung kann dann in Erwartung einer derartigen Situation die Luftwechselrate erhöhen, Bevor die Partikelkonzentration ansteigt bzw. die Partikelkonzentration vorsorglich absenken. So kann vermieden werden, dass aufgrund der Regelung der Luftwechselrate nach der Partikelkonzentration gegebenenfalls erst eine Erhöhung der Luftwechselrate regelungsbedingt abgewartet werden muss. Das Verfahren ermöglicht somit eine noch bessere Anpassung an betriebliche Gegebenheiten, ohne dass Einschränkungen bei einer Nutzung des Arbeitsraums in Kauf zu nehmen wären.

Weiter kann die Steuervorrichtung in Abhängigkeit einer Zeitsteuerung und/oder einer Bewegungsintensität einen Soll-Messwert auswählen, wobei als Soll-Messwert ein Soll-Aktivitätswert für einen Betriebszeitraum oder ein Soll-Inaktivitätswert für einen Ruhezeitraum ausgewählt werden kann. Wird beispielsweise ein Arbeitsraum in einem Zweischichtbetrieb betrieben, kann innerhalb des Ruhezeitraums ein Soll-Inaktivitätswert ausgewählt bzw. festgelegt werden der beispielsweise eine vergleichsweise hohe Partikelkonzentration im Arbeitsraum erlaubt, die so hoch ist, dass der Arbeitsraum während des Ruhezeitraums nicht von Personen betreten werden kann. Vorzugsweise kann daher in dem Ruhezeitraum gegenüber dem Betriebszeitraum eine Partikelkonzentration, eine Temperatur, und/oder eine relative Luftfeuchte erhöht oder auch die Temperatur und/oder die relative Luftfeuchte abgesenkt werden, je nach dem welche diesbezüglichen Umgebungsbedingungen vorherrschen, zum Beispiel Sommer oder Winter. Beispielsweise kann in dem Betriebszeitraum eine Lufttemperatur von 20° bis 22° bei 40% bis 50% relative Luftfeuchte und in dem Ruhezeitraum eine Lufttemperatur von 8° bis 25° bei 25% bis 60% relative Luftfeuchte vorgesehen sein. Somit kann dann eine Luftwechselrate wesentlich gemindert werden. Der Soll-Aktivitätswert kann entsprechend einer durchschnittlichen Bewegungsintensität im Arbeitsraum festgelegt werden. Somit kann die Luftwechselrate und damit ein Energieverbrauch noch besser an die Betriebserfordernisse des Arbeitsraums angepasst werden.

Das erfindungsgemäße Raumsystem, für insbesondere einen Reinraum, umfasst eine Auswertevorrichtung, einen Arbeitsraum, eine raumlufttechnische Anlage und eine Steuervorrichtung, wobei mittels der Steuervorrichtung die raumlufttechnische Anlage steuerbar und/oder regelbar ist, wobei mittels der raumlufttechnischen Anlage eine Luftwechselrate in dem Arbeitsraum und eine Druckdifferenz zwischen dem Arbeitsraum und einer Umgebung ausbildbar ist, wobei die Steuervorrichtung eine Sensoreinrichtung mit einem Partikelsensor zur Bestimmung von Messwerten für Partikelkonzentration im Arbeitsraum oder in einer Abluft der raumlufttechnischen Anlage innerhalb eines Überwachungszeitabschnitts umfasst, wobei die Sensoreinrichtung eine Kamera aufweist, mittels der Bilddatensätze des Arbeitsraums in den Überwachungszeitabschnitt erfassbar sind, wobei mittels der Auswertevorrichtung die Bilddatensätze mit Zeitwerten des Überwachungszeitabschnitts und Messwerten für Partikelkonzentration korrelierbar sind, wobei die Bilddatensätze in einer Speichereinrichtung der Auswertevorrichtung abrufbar speicherbar sind.

Weitere vorteilhafte Ausführungsformen des Raumsystems ergeben sich aus den Merkmalsbeschreibungen der auf den Verfahrensanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine schematische Darstellung eines Raumsystems mittels eines Blockdiagrammes;
- **Fig. 2**: eine schematische Darstellung eines weiteren Raumsystems.

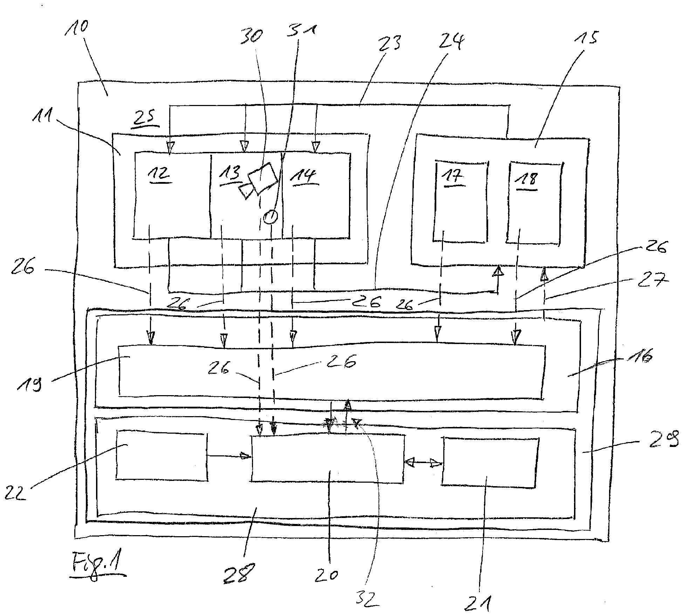

Die **Fig. 1** zeigt eine schematische Darstellung eines Raumsystems 10, wobei das Raumsystem 10 eine Arbeitsraumanordnung 11 mit einer Mehrzahl von untereinander verbundenen und begehbaren Arbeitsräumen 12, 13 und 14, eine raumlufttechnische Anlage 15 und eine Steuervorrichtung 16 umfasst. Die raumlufttechnische Anlage 15 weist ihrerseits eine Ventilatoreinrichtung 17 und eine Behandlungseinrichtung 18 auf.

Die Ventilatoreinrichtung 17 ist aus einem hier nicht näher dargestellten Zuluftlüfter und einem Abluftlüfter ausgebildet, wobei die Behandlungseinrichtung 18 einen ebenfalls nicht dargestellten Erhitzer, Kühler und/oder Be- bzw. Entfeuchter aufweist. Die Steuervorrichtung 16 weist eine Sensoreinrichtung 19 auf.

Die Arbeitsräume 12, 13 und 14 werden über einen Zuluftkanal 23 und einen Abluftkanal 24 von der raumlufttechnischen Anlage 15 mit behandelter und gefilterter Luft versorgt, wobei in den Arbeitsräumen 12, 13 und 14 eine Druckdifferenz gegenüber einer Umgebung 25 bei einem stetigen Luftwechsel ausgebildet wird. Die Sensoreinrichtung 19 erhält über jeweils eine Signalleitung 26 einen Messwert eines Betriebsparameters aus den Arbeitsräumen 12, 13 und 14 sowie der Ventilatoreinrichtung 17 und der Behandlungseinrichtung 18. Die jeweiligen Messwerte der Betriebsparameter werden von der Steuervorrichtung 16 und 20 zur Anpassung der Luftwechselrate in den Arbeitsräumen 12, 13 und 14 im Rahmen einer Regelung nach Soll-Werten genutzt. Die Steuervorrichtung 16 versorgt über eine Signalleitung 27 die raumlufttechnische Anlage 15 mit Steuersignalen, die eine Anpassung der betreffenden Luftwechselrate derart bewirkt, dass die Messwerte in den jeweiligen Bereichen der Soll-Werte liegen bzw. mit diesen im Wesentlichen übereinstimmen. Insbesondere dadurch, dass diese Regelung über die Luftwechselrate ausgeführt wird, kann ein Energieverbrauch der Ventilatoreinrichtung 17 und der Behandlungseinrichtung 18 wesentlich gesenkt und damit ein kostengünstigerer Betrieb des Raumsystems 10 erzielt werden.

Weiter weist das Raumsystem 10 eine Auswertevorrichtung 28 auf, die zusammen mit der Steuervorrichtung 16 eine Anlagensteuerung 29 ausbildet. Die Auswertevorrichtung 28 umfasst eine Verarbeitungseinrichtung 20, eine Speichereinrichtung 21 sowie eine Zeitsteuereinrichtung 22. Die Verarbeitungseinrichtung 20 ist ebenfalls über Signalleitungen 26 mit den Arbeitsräumen 12, 13 und 14 verbunden, insbesondere mit einer Kamera 30 und einem Partikelsensor 31 innerhalb des Arbeitsraums 13. Die Arbeitsräume 12 und 14 sind ebenfalls mit hier nicht dargestellten Partikelsensoren und Kameras ausgestattet. Die Kamera 30 nimmt ein Abbild des Arbeitsraums 13 in Form von Bilddatensätzen auf und übermittelt diese über die Signalleitung 26 an die Verarbeitungseinrichtung 20. Der Partikelsensor 31 ermittelt Messwerte für Partikelkonzentration in dem Arbeitsraum 13 und übermittelt diese über eine Signalleitung 26 an die Verarbeitungseinrichtung 20. Die Verarbeitungseinrichtung 20 speichert die Bilddatensätze und die Messwerte in der Speichereinrichtung 21, wobei die Verarbeitungseinrichtung 20 gleichzeitig auf die dort gespeicherten Bilddatensätze und Messwerte zurückgreift. Die Zeitsteuerung 22 initiiert dabei einen Zugriff auf Bilddatensätze und Messwerte unter Berücksichtigung eines Überwachungszeitabschnitts und weist gleichzeitig den Bilddatensätzen und den Messwerten einen Zeitwert zu. Weiter ist die Steuervorrichtung mit der Auswertevorrichtung 28 über eine Datenleitung 32 verbunden, derart, dass zwischen der Steuervorrichtung 16 und der Auswertevorrichtung 28 Daten ausgetauscht werden können. So kann die Auswertevorrichtung 28 Betriebsdaten der Steuervorrichtung 16 speichern oder Messwerte und Signale an die Steuervorrichtung 16 übermitteln. Beispielsweise kann die Auswertevorrichtung 28 eine Bewegung einer hier nicht dargestellten Person in dem Arbeitsraum 13 über die Kamera 30 detektieren und der Steuervorrichtung 16 signalisieren, wobei die Steuervorrichtung 16 dann eine Luftwechselrate erhöhen kann. Weiter ist es möglich ein Monitoring der in den Arbeitsräumen 12, 13 und 14 durchgeführten Arbeitstätigkeiten durchzuführen, da die Messwerte des Partikelsensors 31 und die Bilddatensätze der Kamera 30 in der Speichereinrichtung 21 gespeichert werden.

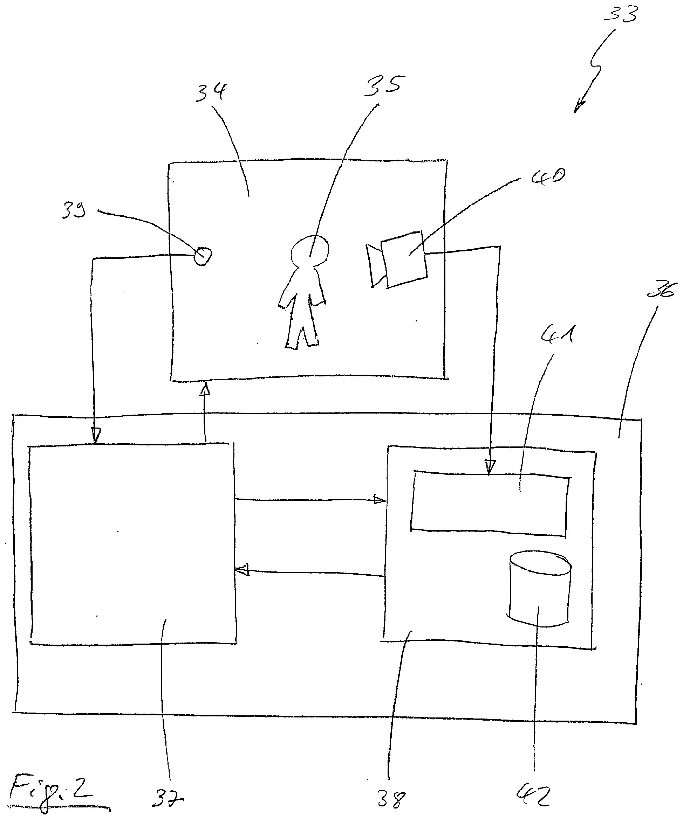

Die **Fig. 2** zeigt eine schematische Darstellung eines weiteren Raumsystems 33, ohne dass die erforderlichen Mittel zur Klimatisierung dargestellt sind. Innerhalb eines Arbeitsraums 34 des Raumsystems 33 ist eine Person 35 anwesend, wobei der Arbeitsraum 34 gleichzeitig klimatisiert wird. Das Raumsystem 33 umfasst eine Anlagensteuerung 36 mit einer Steuervorrichtung 37 und einer Auswertevorrichtung 38. An die Steuervorrichtung 37 ist ein Partikelsensor 39 innerhalb des Arbeitsraums 34 angeschlossen, der kontinuierlich Messwerte einer Partikelkonzentration an die Steuervorrichtung 37 übermittelt. Die Steuervorrichtung 37 regelt aufgrund der vom Partikelsensor 39 erhaltenen Messwerte für eine Partikelkonzentration eine Luftwechselrate in dem Arbeitsraum 34 gemäß einer Vorgabe.

In dem Arbeitsraum 34 ist weiter eine Kamera 40 angeordnet, mittels der die Person 35 zumindest teilweise thermografisch aufgenommen wird, wobei die Kamera 40 entsprechende Bilddatensätze an die Auswertevorrichtung 38 übermittelt. Die Auswertevorrichtung 38 weist ihrerseits eine Bildverarbeitungseinrichtung 41 und eine Speichereinrichtung 42 auf. Die Bildverarbeitungseinrichtung 41 verarbeitet die Bilddatensätze, wobei die Bilddatensätze in der Speichereinrichtung 42 gespeichert werden. Weiter weist die Auswertevorrichtung 38 den Bilddatensätzen, die in einer stetigen Abfolge aufgenommen werden, jeweils Zeitwerte innerhalb eines Überwachungszeitabschnitts zu. Die Steuervorrichtung 37 übermittelt der Auswertevorrichtung 38 mit den Zeitwerten synchronisierte Messwerte für eine Partikelkonzentration, die auch in der Speichereinrichtung 42 gespeichert werden. Es kann daher während oder nach dem Überwachungszeitabschnitt der Überwachungszeitabschnitt mit allen relevanten Daten ausgewertet werden.

Insbesondere ist vorgesehen, dass die Auswertevorrichtung 38 eine Zustandsänderung der Person 35 erkennt, wobei diese Erkennung mittels der Bildverarbeitungseinrichtung 41 erfolgt. Die Erkennung einer Zustandsänderung kann durch einen einfachen Vergleich von Bilddatensätzen durchgeführt werden.

## Patentansprüche

1. Verfahren zur Überwachung eines Raumsystems (10, 33), insbesondere eines Reinraums, wobei das Raumsystem einen Arbeitsraum (12, 13, 14, 34), eine raumlufttechnische Anlage (15) und eine Steuervorrichtung (16, 37) umfasst, wobei mittels der Steuervorrichtung die raumlufttechnische Anlage gesteuert und/oder geregelt wird, wobei mittels der raumlufttechnischen Anlage eine Luftwechselrate in dem Arbeitsraum und eine Druckdifferenz zwischen dem Arbeitsraum und einer Umgebung (25) ausgebildet wird, wobei in einem Überwachungszeitabschnitt mittels eines Partikelsensors (31, 39) einer Sensoreinrichtung (19) der Steuervorrichtung Messwerte für Partikelkonzentration im Arbeitsraum oder in einer Abluft der raumlufttechnischen Anlage bestimmt werden,
worin mittels einer Kamera (30, 40) der Sensoreinrichtung Bilddatensätze des Arbeitsraums in dem Überwachungszeitabschnitt erfasst werden, wobei mittels einer Auswertevorrichtung (28, 38) Bilddatensätze mit Zeitwerten des Überwachungszeitabschnitts und Messwerten für Partikelkonzentration korreliert werden, wobei die Bilddatensätze in einer Speichereinrichtung (21, 42) abrufbar gespeichert werden.

2. Verfahren nach Anspruch 1,
**dadurch gekennzeichnet,**
**dass** die Bilddatensätze mittels der Auswertevorrichtung (28, 38) verarbeitet werden, wobei mittels der Auswertevorrichtung eine Veränderung der Bilddatensätze bestimmt wird.

3. Verfahren nach Anspruch 1 oder 2,
**dadurch gekennzeichnet,**
**dass** eine mit der Kamera (30, 40) optisch erfassbare Veränderung innerhalb des Arbeitsraumes (12, 13, 14, 34) in dem Überwachungszeitabschnitt mittels der Auswertevorrichtung (28, 38) als eine Zustandsänderung bestimmt wird.

4. Verfahren nach Anspruch 2 oder 3,
**dadurch gekennzeichnet,**
**dass** anhand der Veränderung der Bilddatensätze in dem Überwachungszeitabschnitt eine Bewegungsgeschwindigkeit einer im Arbeitsraum (12, 13, 14, 34) befindlichen Person (35) oder eines Gegenstands mittels der Auswertevorrichtung (28, 38) bestimmt wird.

5. Verfahren nach einem der vorangehenden Ansprüche,
**dadurch gekennzeichnet,**
**dass** die Auswertevorrichtung (28, 38) Bilddatensätze mehrerer Kameras (30, 40) gleichzeitig verarbeitet.

6. Verfahren nach einem der vorangehenden Ansprüche,
**dadurch gekennzeichnet,**
**dass** die Kamera (30, 40) eine Wärmebildkamera ist, wobei der Arbeitsraum (12, 13, 14, 34) mittels der Wärmebildkamera thermografisch aufgenommen wird.

7. Verfahren nach Anspruch 6,
**dadurch gekennzeichnet,**
**dass** in dem Überwachungszeitabschnitt mittels der Wärmebildkamera (30, 40) aus Pixeln gebildete thermografische Aufnahmen des Arbeitsraums (12, 13, 14, 34), die durch die Bilddatensätze repräsentiert werden, erfasst werden, wobei den Bilddatensätzen jeweils Zeitwerte innerhalb des Überwachungszeitabschnitts zugeordnet werden, wobei je Zeitwert zumindest einem Pixel eines Bilddatensatzes ein Temperaturwert innerhalb des Überwachungszeitabschnitts zugeordnet wird, derart, dass mittels der Wärmebildkamera eine Temperaturmessung eines von dem Pixel repräsentierten Oberflächenpunktes einer Oberfläche innerhalb des Arbeitsraums erfolgt.

8. Verfahren nach Anspruch 6 oder 7,
**dadurch gekennzeichnet,**
**dass** die Auswertevorrichtung (28, 38) in Aufnahmen des Arbeitsraums (12, 13, 14, 34), die durch die Bilddatensätze repräsentiert werden, eine Person (35) erfasst, wobei die Auswertevorrichtung die Bilddatensätze verarbeitet und eine Körpertemperatur der Person misst.

9. Verfahren nach einem der vorangehenden Ansprüche,
**dadurch gekennzeichnet,**
**dass** die Auswertevorrichtung (28, 38) in Aufnahmen des Arbeitsraums (12, 13, 14, 34), die durch die Bilddatensätze repräsentiert werden, ein Gesicht einer Person (35) erfasst, wobei die Auswertevorrichtung die Bilddatensätze verarbeitet und das Gesicht einem in der Speichereinrichtung (21, 42) gespeicherten biometrischen Datensatz eines Gesichts einer bestimmten Person zuordnet.

10. Verfahren nach einem der vorangehenden Ansprüche,
**dadurch gekennzeichnet,**
**dass** die Auswertevorrichtung (28, 38) in Aufnahmen des Arbeitsraums (12, 13, 14, 34), die durch die Bilddatensätze repräsentiert werden, eine Person (35) erfasst, wobei die Auswertevorrichtung die Bilddatensätze verarbeitet und eine Personenanzahl im Arbeitsraum und/oder eine Bewegungsintensität der Person bestimmt.

11. Verfahren nach einem der vorangehenden Ansprüche,
**dadurch gekennzeichnet,**
**dass** die Kamera (30, 40) innerhalb des Arbeitsraums (12, 13, 14, 34) oder außerhalb des Arbeitsraums verwendet wird.

12. Verfahren nach einem der vorangehenden Ansprüche,
**dadurch gekennzeichnet,**
**dass** mittels der Sensoreinrichtung (19) in dem Überwachungszeitabschnitt Messwerte für Lufttemperatur, relative Luftfeuchte, Luftwechselrate, Luftdruck, Bewegungsintensität, Personenanzahl, CO2-Konzentration und/oder Türöffnung erfasst werden.

13. Verfahren nach einem der vorangehenden Ansprüche,
**dadurch gekennzeichnet,**
**dass** die Auswertevorrichtung (28, 38) der Steuervorrichtung (16, 37) eine Veränderung der Bilddatensätze signalisiert, wobei die Steuervorrichtung eine Anpassung der Luftwechselrate in Abhängigkeit der Veränderung vornimmt.

14. Verfahren nach einem der vorangehenden Ansprüche,
**dadurch gekennzeichnet,**
**dass** mittels der Auswertevorrichtung (28, 38) Betriebsdaten oder Messwerte der raumlufttechnischen Anlage (15) oder anderer, im Arbeitsraum (12, 13, 14, 34) befindlicher Maschinen mit Zeitwerten des Überwachungszeitabschnitts korreliert werden, wobei die Betriebsdaten oder Messwerte in der Speichereinrichtung (21, 42) abrufbar gespeichert werden.

15. Verfahren nach Anspruch 14,
**dadurch gekennzeichnet,**
**dass** die Auswertevorrichtung (28, 38) aus den gespeicherten Betriebsdaten oder Messwerten regelmäßig wiederkehrende Abfolgen von Betriebszuständen ableitet, wobei die Steuervorrichtung (16, 37) eine Anpassung der Luftwechselrate auf einen zukünftig zu erwartenden Betriebszustand vornimmt.

16. Verfahren nach einem der vorangehenden Ansprüche,
**dadurch gekennzeichnet,**
**dass** die Steuervorrichtung (16, 37) in Abhängigkeit einer Zeitsteuereinrichtung (22) und/oder einer Bewegungsintensität einen Soll-Messwert auswählt, wobei als Soll-Messwert ein Soll-Aktivitätswert für einen Betriebszeitraum oder ein Soll-Inaktivitätswert für einen Ruhezeitraum ausgewählt wird.

17. Verfahren nach Anspruch 16,
**dadurch gekennzeichnet,**
**dass** in dem Ruhezeitraum gegenüber dem Betriebszeitraum eine Partikelkonzentration, Temperatur und/oder relative Luftfeuchte erhöht oder die Partikelkonzentration erhöht und die Temperatur und/oder die relative Luftfeuchte abgesenkt wird.

18. Raumsystem (10, 33), insbesondere ein Reinraum, wobei das Raumsystem einen Arbeitsraum (12, 13, 14, 34), eine Auswertevorrichtung (28, 38), eine raumlufttechnische Anlage (15) und eine Steuervorrichtung (16, 37) umfasst, wobei mittels der Steuervorrichtung die raumlufttechnischen Anlage steuerbar und/oder regelbar ist, wobei mittels der raumlufttechnischen Anlage eine Luftwechselrate in dem Arbeitsraum und eine Druckdifferenz zwischen dem Arbeitsraum und einer Umgebung (25, 45) ausbildbar ist, wobei die Steuervorrichtung eine Sensoreinrichtung (19) mit einem Partikelsensor (31, 39) zur Bestimmung von Messwerten für Partikelkonzentration im Arbeitsraum oder in einer Abluft der raumlufttechnischen Anlage innerhalb eines Überwachungszeitabschnitts umfasst,
wobei
die Sensoreinrichtung eine Kamera (30, 40) aufweist, mittels der Bilddatensätze des Arbeitsraums in dem Überwachungszeitabschnitt erfassbar sind, wobei mittels der Auswertevorrichtung (28, 38) die Bilddatensätze mit Zeitwerten des Überwachungszeitabschnitts und Messwerten für Partikelkonzentration korrelierbar sind, wobei die Bilddatensätze in einer Speichereinrichtung (21, 42) der Auswertevorrichtung abrufbar speicherbar sind.

## Claims

1. A method for monitoring a room system (10, 33), in particular a clean room, the room system comprising a working room (12, 13, 14, 34), a ventilation and air-conditioning plant (15) and a control device (16, 37), the ventilation and air-conditioning plant being controlled and/or regulated by means of the control device, an air change rate in the working room and a pressure difference between the working room and an environment (25) being established by means of the ventilation and air-conditioning plant, measured values of a particle concentration in the working room or in an exhaust air of the ventilation and air-conditioning plant being determined in a monitoring period by means of a particle sensor (31, 39) of a sensor means (19) of the control device,
wherein image data sets of the working room are recorded by means of a camera (30, 40) of the sensor means in the monitoring period, image data sets being correlated with time values of the monitoring period and measured values of a particle concentration by means of an evaluation device (28, 38), the image data sets being retrievably stored in a storage means (21, 42).

2. The method according to claim 1,
**characterized in that**
the image data sets are processed by means of the evaluation device (28, 38), a change in the image data sets being determined by means of the evaluation device.

3. The method according to claim 1 or 2,
**characterized in that**
a change inside the working room (12, 13, 14, 34) in the monitoring period which is optically detectable with the camera (30, 40) is determined as a change in state by means of the evaluation device (28, 38).

4. The method according to claim 2 or 3,
**characterized in that**
based on the change in the image data sets in the monitoring period, a speed of movement of a person (35) present in the working room (12, 13, 14, 34) or of an object is determined by means of the evaluation device (28, 38).

5. The method according to any one of the preceding claims,
**characterized in that**
the evaluation device (28, 38) processes image data sets of several cameras (30, 40) simultaneously.

6. The method according to any one of the preceding claims,
**characterized in that**
the camera (30, 40) is a thermographic camera, the working room (12, 13, 14, 34) being thermographically captured by means of the thermographic camera.

7. The method according to claim 6,
**characterized in that**
thermographic images of the working room (12, 13, 14, 34) which are composed of pixels and are represented by the image data sets are recorded in the monitoring period by means of the thermographic camera (30, 40), a time value within the monitoring period being assigned to each image data set, a temperature value within the monitoring period being assigned to at least one pixel of an image data set for each time value by measuring the temperature of a surface point of a surface inside the working room represented by the pixel by means of the thermographic camera.

8. The method according to claim 6 or 7,
**characterized in that**
the evaluation device (28, 38) detects a person (35) in images of the working room (12, 13, 14, 34) which are represented by the image data sets, the evaluation device processing the image data sets and measuring a body temperature of the person.

9. The method according to any one of the preceding claims,
**characterized in that**
the evaluation device (28, 38) detects a face of a person (35) in images of the working room (12, 13, 14, 34) which are represented by the image data sets, the evaluation device processing the image data sets and assigning the face to a biometric data set of a face of a particular person stored in the storage means (21, 42).

10. The method according to any one of the preceding claims,
**characterized in that**
the evaluation device (28, 38) detects a person (35) in images of the working room (12, 13, 14, 34) which are represented by the image data sets, the evaluation device processing the image data sets and determining a number of persons in the working room and/or a movement intensity of the person.

11. The method according to any one of the preceding claims,
**characterized in that**
the camera (30, 40) is used inside the working room (12, 13, 14, 34) or outside the working room.

12. The method according to any one of the preceding claims,
**characterized in that**
measured values of the air temperature, relative humidity, air change rate, air pressure, movement intensity, number of persons, CO2 concentration and/or opening of the door are recorded by means of the sensor means (19) in the monitoring period.

13. The method according to any one of the preceding claims,
**characterized in that**
the evaluation device (28, 38) of the control device (16, 37) signals a change in the image data sets, the control device adjusting the air change rate as a function of the change.

14. The method according to any one of the preceding claims,
**characterized in that**
operating data or measured values of the ventilation and air-conditioning plant (15) or other machines present in the working room (12, 13, 14, 34) are correlated with time values of the monitoring period by means of the evaluation device (28, 38), the operating data or measured values being retrievably stored in the storage means (21, 42).

15. The method according to claim 14,
**characterized in that**
the evaluation device (28, 38) derives periodic sequences of operating states from the stored operating data or the measured values, the control device (16, 37) adjusting the air change rate to an expected operating state.

16. The method according to any one of the preceding claims,
**characterized in that**
the control device (16, 37) selects a desired measured value as a function of a time control means (22) and/or a movement intensity, a desired activity value for an operating period being selected or a desired inactivity value for a rest period being selected as the desired measured value.

17. The method according to claim 16,
**characterized in that**
in the rest period, a particle concentration, a temperature and/or a relative humidity are/is increased or the particle concentration is increased and the temperature and/or the relative humidity are/is reduced in comparison to the operating period.

18. A room system (10, 33), in particular a clean room, the room system comprising a working room (12, 13, 14, 34), an evaluation device (28, 38), a ventilation and air-conditioning plant (15) and a control device (16, 37), the ventilation and air-conditioning plant being controllable and/or regulatable by means of the control device, an air change rate in the working room and a pressure difference between the working room and an environment (25, 45) being establishable by means of the ventilation and air-conditioning plant, the control device comprising a sensor means (19) having a particle sensor (31, 39) for determining measured values of a particle concentration in the working room or in an exhaust air of the ventilation and air-conditioning plant within a monitoring period,
wherein the sensor means has a camera (30, 40) by means of which image data sets of the working room are recordable in the monitoring period, the image data sets being correlatable with time values of the monitoring period and measured values of a particle concentration by means of the evaluation device (28, 38), the image data sets being retrievably storable in a storage means (21, 42) of the evaluation device.

## Revendications

1. Procédé pour surveiller un système de salles (10, 33), notamment une salle blanche, le système de salles comprenant une salle de travail (12, 13, 14, 34), une installation (15) de ventilation et climatisation et un dispositif de commande (16, 37), l'installation de ventilation et climatisation étant commandée et/ou régulée au moyen du dispositif de commande, un taux de renouvellement d'air dans la salle de travail et une différence de pression entre la salle de travail et un environnement (25) étant établis au moyen de l'installation de ventilation et climatisation, des valeurs mesurées d'une concentration de particules dans la salle de travail ou dans un air vicié de l'installation de ventilation et climatisation étant déterminées au moyen d'un capteur de particules (31, 39) d'un moyen capteur (19) du dispositif de commande dans une période de surveillance,
dans lequel des ensembles de données d'images de la salle de travail sont enregistrés dans la période de surveillance au moyen d'une caméra (30, 40), des ensembles de données d'images étant corrélés avec des valeurs temporelles de la période de surveillance et des valeurs mesurées d'une concentration de particules au moyen d'un dispositif d'évaluation (28, 38), les ensembles de données d'images étant mémorisés dans un moyen de mémoire (21, 42) de manière à pouvoir être consultés.

2. Procédé selon la revendication 1,
**caractérisé en ce que**
les ensembles de données d'images sont traités au moyen du dispositif d'évaluation (28, 38), un changement des ensembles de données d'images étant déterminé au moyen du dispositif d'évaluation (28, 38).

3. Procédé selon la revendication 1 ou 2,
**caractérisé en ce**
**qu'**un changement à l'intérieur de la salle de travail (12, 13, 14, 34) dans la période de surveillance qui est détectable optiquement avec la caméra (30, 40) est déterminé comme changement d'état au moyen du dispositif d'évaluation (28, 38).

4. Procédé selon la revendication 2 ou 3,
**caractérisé en ce que**
sur la base du changement des ensembles de données d'images dans la période de surveillance, une vitesse de mouvement d'une personne (35) qui se trouve dans la salle de travail (12, 13, 14, 34) ou d'un objet est déterminée au moyen du dispositif d'évaluation (28, 38).

5. Procédé selon l'une quelconque des revendications précédentes,
**caractérisé en ce que**
le dispositif d'évaluation (28, 38) traite simultanément des ensembles de données d'images de plusieurs caméras (30, 40).

6. Procédé selon l'une quelconque des revendications précédentes,
**caractérisé en ce que**
la caméra (30, 40) est une caméra thermique, la salle de travail (12, 13, 14, 34) étant enregistrée de manière thermographique au moyen de la caméra thermique.

7. Procédé selon la revendication 6,
**caractérisé en ce que**
des enregistrements thermographiques de la salle de travail (12, 13, 14, 34) qui sont composés de pixels et représentés par les ensembles de données d'images sont enregistrés dans la période de surveillance au moyen de la caméra thermographique (30, 40), une valeur temporelle dans la période de surveillance étant attribuée à chaque ensemble de données d'images, une valeur de température dans la période de surveillance étant attribuée à au moins un pixel d'un ensemble de données d'images pour chaque valeur temporelle en mesurant la température d'un point de surface d'une surface à l'intérieur de la salle de travail représenté par le pixel au moyen de la caméra thermique.

8. Procédé selon la revendication 6 ou 7,
**caractérisé en ce que**
le dispositif d'évaluation (28, 38) détecte une personne (35) dans des enregistrements de la salle de travail (12, 13, 14, 34) représentés par les ensembles de données d'images, le dispositif d'évaluation traitant les ensembles de données d'images et mesurant une température du corps de la personne.

9. Procédé selon l'une quelconque des revendications précédentes,
**caractérisé en ce que**
le dispositif d'évaluation (28, 38) détecte un visage d'une personne (35) dans des enregistrements de la salle de travail (12, 13, 14, 34) représentés par les ensembles de données d'images, le dispositif d'évaluation traitant les ensembles de données d'images et attribuant le visage à un ensemble de données biométrique d'un visage d'une personne déterminée mémorisé dans le moyen de mémoire (21, 42).

10. Procédé selon l'une quelconque des revendications précédentes,
**caractérisé en ce que**
le dispositif d'évaluation (28, 38) détecte une personne (35) dans des enregistrements de la salle de travail (12, 13, 14, 34) représentés par les ensembles de données d'images, le dispositif d'évaluation traitant les ensembles de données d'images et déterminant un nombre de personnes dans la salle de travail et/ou une intensité du mouvement de la personne.

11. Procédé selon l'une quelconque des revendications précédentes,
**caractérisé en ce que**
la caméra (30, 40) est utilisée à l'intérieur de la salle de travail (12, 13, 14, 34) ou à l'extérieur de la salle de travail.

12. Procédé selon l'une quelconque des revendications précédentes,
**caractérisé en ce que**
des valeurs mesurées de la température de l'air, de l'humidité relative, du taux de renouvellement d'air, de la pression de l'air, de l'intensité du mouvement, du nombre de personnes, de la concentration de CO2 et/ou de l'ouverture de la porte sont enregistrées au moyen du moyen capteur (19) dans la période de surveillance.

13. Procédé selon l'une quelconque des revendications précédentes,
**caractérisé en ce que**
le dispositif d'évaluation (28, 38) du dispositif de commande (16, 37) signale un changement des ensembles de données d'images, le dispositif de commande ajustant le taux de renouvellement d'air en fonction du changement.

14. Procédé selon l'une quelconque des revendications précédentes,
**caractérisé en ce que**
des données de fonctionnement ou des valeurs mesurées de l'installation (15) de ventilation et climatisation ou d'autres machines présentes dans la salle de travail (12, 13, 14, 34) sont corrélées avec des valeurs temporelles de la période de surveillance au moyen du dispositif d'évaluation (26, 38), les données de fonctionnement ou les valeurs mesurées étant mémorisées dans le moyen de mémoire (21, 42) de manière à pouvoir être consultées.

15. Procédé selon la revendication 14,
**caractérisé en ce que**
le dispositif d'évaluation (28, 38) dérive des séquences périodiques d'états de fonctionnement des données de fonctionnement ou des valeurs mesurées, le dispositif de commande (16, 37) ajustant le taux de renouvellement d'air à un état de fonctionnement attendu.

16. Procédé selon l'une quelconque des revendications précédentes,
**caractérisé en ce que**
le dispositif de commande (16, 37) sélectionne une valeur mesurée prescrite en fonction d'un moyen (22) de commande de temps et/ou d'une intensité du mouvement, une valeur d'activité prescrite pour une période de fonctionnement étant sélectionnée ou une valeur d'inactivité prescrite pour une période de repos étant sélectionnée comme valeur mesurée.

17. Procédé selon la revendication 16,
**caractérisé en ce que**
dans la période de repos, une concentration de particules, une température et/ou une humidité relative est/sont augmentée/s ou la concentration de particules est augmentée et la température et/ou l'humidité relative est/sont diminuée/s par rapport à la période de fonctionnement.

18. Système de salles (10, 33), notamment une salle blanche, le système de salles comprenant une salle de travail (12, 13, 14, 34), un dispositif d'évaluation (28, 38), une installation (15) de ventilation et climatisation et un dispositif de commande (16, 37), l'installation de ventilation et climatisation étant commandable et/ou régulable au moyen du dispositif de commande, un taux de renouvellement d'air dans la salle de travail et une différence de pression entre la salle de travail et un environnement (25, 45) pouvant être établis au moyen de l'installation de ventilation et climatisation, le dispositif de commande comprenant un moyen capteur (19) ayant un capteur de particules (31, 39) pour déterminer des valeurs mesurées d'une concentration de particules dans la salle de travail ou dans un air vicié de l'installation de ventilation et climatisation dans une période de surveillance,
dans lequel le moyen capteur a une caméra (30, 40) au moyen de laquelle des ensembles de données d'images de la salle de travail sont enregistrables dans la période de surveillance, les ensembles de données d'images étant corrélables avec des valeurs temporelles de la période de surveillance et des valeurs mesurées d'une concentration de particules au moyen du dispositif d'évaluation (28, 38), les ensembles de données d'images étant mémorisables dans un moyen de mémoire (21, 42) du dispositif d'évaluation de manière à pouvoir être consultés.
